# EUROPÄISCHE PATENTSCHRIFT

(11) **EP 0 591 691 B1**
(45) Veröffentlichungstag und Bekanntmachung des Hinweises auf die Patenterteilung: **05.01.2000**
(21) Anmeldenummer: 93114298.8
(22) Anmeldetag: 07.09.1993
(51) Int. Cl.: E04D 5/12, E04D 5/10

(54) **Abdeckung, insbesondere für Dächer, und Abdichtbahn für eine derartige Abdeckung**
Covering, particularly for roofs, and sealing membrane for such a covering
Revêtement, en particulier pour toitures, et membrane d'étanchéité pour un tel revêtement

(30) Priorität: 08.09.1992 DE 9211849 U
(43) Veröffentlichungstag der Anmeldung: 13.04.1994
(73) Patentinhaber: Roland-Werke Dachbaustoffe und Bauchemie GmbH & Co. KG, 28832 Achim (DE)
(72) Erfinder: Marzouki, Taieb, D-27299 Langwedel-Etelsen (DE)
(74) Vertreter: Möller, Friedrich, Dipl.-Ing.

(56) Entgegenhaltungen:
- EP-A- 0 006 189
- EP-A- 0 096 308
- EP-A- 0 207 573
- EP-A- 0 497 338
- WO-A-85/04209
- FR-A- 2 246 390
- FR-A- 2 477 201

## Beschreibung

Die Erfindung betrifft eine Abdeckung, insbesondere für Dächer, gemäß dem Oberbegriff des Anspruchs 1. Des weiteren betrifft die Erfindung eine Abdichtbahn für eine solche Abdeckung nach dem Oberbegriff des Anspruchs 6.

Abdeckungen und Abdichtbahnen finden im Baubereich als Teile von Gebäuden, und zwar insbesondere Dächern, Wänden, Decken oder dergleichen, Verwendung. Solche Abdeckungen und Abdichtbahnen bestehen überwiegend aus brennbarem Material. Daher ist der Brandschutz in diesem Zusammenhang ein wichtiges Thema.

Aus der EP-A-0 006 189 ist eine bituminierte Dachbahn bekannt, die zur Verbesserung der Flammenfestigkeit eine Metallfolie aufweist. Diese bekannte Dachbahn ist so aufgebaut, daß sie über eine obere Bitumenschicht verfügt, unter der die gegebenenfalls perforierte Metallfolie angeordnet ist, die unterseitig mit einem Vliesstoff versehen ist, auf die eine untere Bitumenschicht folgt. Die obere und die untere Bitumenschicht sind durch die Metallfolie und den Vliesstoff vollständig getrennt. Dadurch besteht die Gefahr, daß sich die einzelnen Schichten dieser bekannten Dachbahn voneinander trennen (Delaminierung).

Hiervon ausgehend liegt der Erfindung die Aufgabe zugrunde, eine wenigstens eine Brandschutzschicht aufweisende Abdeckung bzw. Abdichtbahn zu schaffen, die einen guten Zusammenhalt ihrer Schichten aufweist.

Zur Lösung dieser Aufgabe weist die erfindungsgemäße Abdeckung die Merkmale des Anspruchs 1 auf. Durch die beidseitige Zuordnung von Bitumen zur Durchbrüche aufweisenden Brandschutzschicht wird erreicht, daß ein außenseitiger Brand erlischt, nachdem das Feuer die Brandschutzschicht erreicht hat. Zu diesem Zweck führen die Durchbrüche in der Branschutzschicht dazu, daß geschmolzenes Material der Dichtungsbahn wie durch ein Sieb durch die Brandschutzschicht hindurch abfließen kann, wobei es vorzugsweise von durch teilweises Wegschmelzen der Dämmschicht entstehende Hohlräume aufgenommen wird. Das brennbare Material wird so im Brandfalle durch die Brandschutzschicht hindurch abgeführt und dadurch dem Feuer die Nahrung entzogen. Ein Brand wird mithin innerhalb kurzer Zeit gelöscht, weil nur das flüssige obere Material durch die Durchbrüche in der Brandschutzschicht hindurchfließt; die Flammen aber zurückgehalten werden und erlöschen, nachdem das durch den Brand flüssig gewordene Material durch die beim Brand bestehenbleibende Brandschutzschicht abgeflossen ist. Die Brandschutzschicht bildet dabei eine Art "Flammengrenzschicht".

Vorzugsweise ist die eine Vielzahl von Durchbrüchen afweisende Brandschutzschicht mindestens teilweise aus einem nicht oder nur schwer brennbaren Material gebildet. Die Brandschutzschicht kann aber auch als Gitter ausgebildet sein. Die Brandschutzschicht brennt daher im Brandfalle nicht weg. Sie bildet eine dauerhafte Grenzschicht für das Feuer.

Weiterhin dient zur Lösung der Aufgabe eine Abdichtbahn mit den Merkmalen des Anspruchs 6. Dadurch, daß die Brandschutzschicht in der Deckschicht der Abdichtbahn eingebettet ist, braucht zur Herstellung der erfindungsgemäßen Abdeckung keine zusätzliche Bahn verlegt zu werden. Mit dem Verlegen der Abdichtbahn wird zwangsläufig die Brandschutzschicht hergestellt. Des weiteren wird durch die Anordnung der Brandschutzschicht in der Deckschicht erreicht, daß nur ein über der Brandschutzschicht sich befindlicher Teil derselben beseitigt werden muß, bevor der Brand erlischt. Durch die Durchbrüche in der Brandschutzschicht werden die auf beiden Seiten derselben befindlichen Teilschichten der Deckschicht miteinander verbunden.

Vorzugsweise ist die Brandschutzschicht in der oberen oder äußeren Deckschicht angeordnet. Dadurch wird im Brandfalle nur diese entflammt. Durch die vollständige Einbettung in die obere oder äußere Deckschicht ist die Brandschutzschicht von außen nicht sichtbar, so daß sie das äußere Erscheinungsbild der Abdichtbahn nicht beeinflußt.

Bei einer bevorzugten Ausführungsform der Abdichtbahn ist die Brandschutzschicht dicht unterhalb der Außenseite der Deckschicht angeordnet. Auf diese Weise kommt die brandlöschende Eigenschaft der Brandschutzschicht schon nach kurzer Zeit zur Wirkung, weil nur eine geringe Menge des erweichten Bitumens der äußeren Deckschicht durch die Öffnung in der Brandschutzschicht abfließen muß, bis ihr brandlöschender Einfluß zur Geltung kommt.

Die Brandschutzschicht besteht bevorzugt aus einer perforierten Folie oder Platte. Alternativ kommt auch eine Bahn aus einem Geflecht (Gitter) in Betracht.

Die Brandschutzschicht besteht mindestens teilweise aus einem nicht oder nur schwer brennbaren Material. Hierbei kann es sich zum Beispiel um Aluminium oder Glasvlies bzw. Glasgewebe handeln. Im Falle eines Brandes bleiben diese Materialien ausreichend stabil und reißen nicht.

Vorzugsweise ist die Brandschutzschicht mehrlagig ausgebildet. Beispielsweise ist mindestens eine Seite der nicht brennbaren Lage der Brandschutzschicht mit einer Beschichtung aus vorzugsweise einem thermoplastischen Kunststoff wie beispielsweise Polypropylen, Polyamid oder Polyester versehen. Dadurch wird die Brandschutzschicht flexibel. Sie reißt weder bei der Verarbeitung noch beim Aufrollen der Abdichtbahn. Außerdem bietet die Kunststoffschicht eine gute Haftung für das zur Einbettung der Brandschutzschicht dienende Bitumen, insbesondere Polymer-Bitumen. Aus diesem Grunde kann es zweckmäßig sein, beide Seiten der nicht brennbaren Lage der Brandschutzschicht mit einer Kunststoffbeschichtung zu versehen.

Bevorzugte Ausführungsbeispiele der erfindungsgemäßen Abdichtung und einer erfindungsgemäß ausgebildeten Abdichtbahn werden nachfolgend anhand der Zeichnung näher erläutert. In dieser zeigen:
- Fig. 1: einen Querschnitt durch eine Dachabdeckung,
- Fig. 2: ein vergrößerter Querschnitt durch eine Abdichtbahn der Dachabdeckung nach Fig. 1,
- Fig. 3: eine Draufsicht auf einen Teil einer Brandschutzschicht in der Abdichtbahn nach den Fig. 1 und 2,
- Fig. 4: ein stark vergrößerter Querschnitt durch die Brandschutzschicht der Abdichtbahn nach den Fig. 1 bis 3, und
- Fig. 5: eine alternative Ausführungsform der Abdichtbahn gemäß der Fig. 2.

Die hier gezeigten Ausführungsbeispiele der Erfindung beziehen sich auf eine Abdichtung, die als eine Dachabdichtung ausgebildet ist.

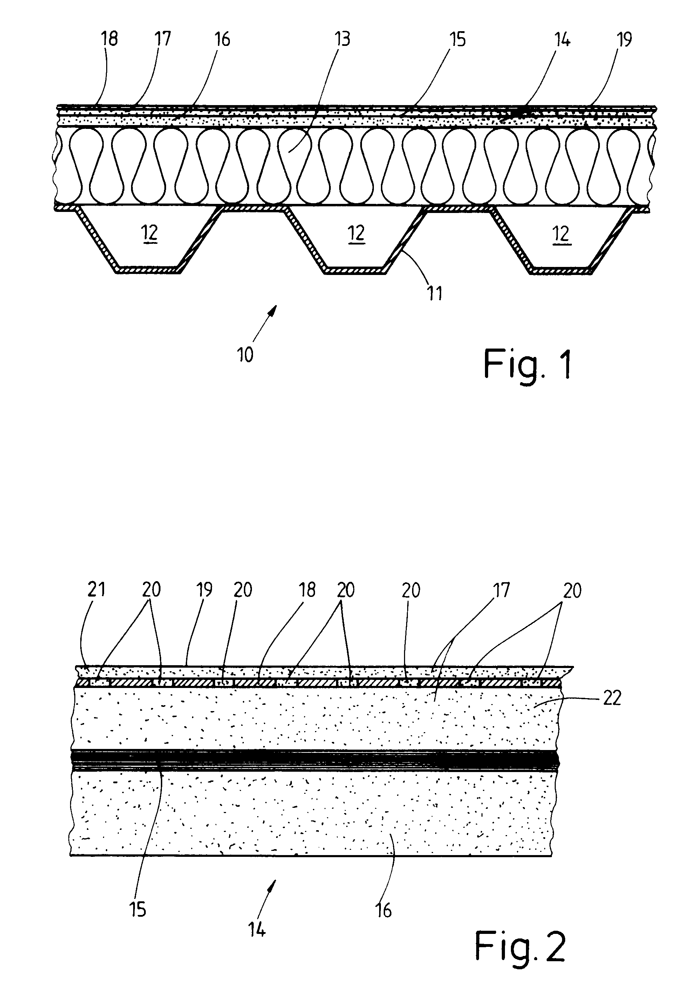

Die Fig. 1 bis 4 zeigen ein erstes Ausführungsbeispiel einer Dachabdichtung 10. Die Dachabdichtung 10 befindet sich auf einer zum Inneren des mit der Dachabdichtung 10 abzudeckenden Gebäudes weisenden Tragschicht 11, die im gezeigten Ausführungsbeispiel als Trapezblech ausgebildet ist. Das Trapezblech verfügt über eine Mehrzahl mit Abstand nebeneinanderliegender Vertiefungen 12 mit trapezförmigem Querschnitt. In den Vertiefungen 12 können von innen zum Brandschutz dienende Hohlkörper mit einer Flüssigkeit (zum Beispiel gemäß DE-36 15 116 Al) angeordnet sein.

Die auf der Tragschicht 11 ruhende Dachabdichtung 10 besteht aus einer unteren (auf der Tragschicht 11 liegenden) Dämmschicht 13. Die Dämmschicht 13 ist hier einlagig ausgebildet. Sie kann sich aber auch aus mehreren übereinanderliegenden Lagen zusammensetzen. Die Dämmschicht 13 kann beispielsweise aus Schaumkunststoff bestehen. Über der Dämmschicht 13 befindet sich eine Abdichtbahn 14. Die Abdichtbahn 14 bildet die äußere Lage der Dachabdichtung 10. Gegebenenfalls kann auf der Abdichtbahn 14 noch eine nicht gezeigte Abstreuung oder Kaschierschicht angeordnet sein. Auch können mehrere Abdichtbahnen auf der Dämmschicht 13 angeordnet sein. Die Erfindung ist nicht beschränkt auf den vorstehend beschriebenen Dachaufbau. Sie kann vielmehr bei allen denkbaren Dachaufbauten zum Einsatz kommen.

Der Aufbau der Abdichtbahn 14 ist (vergrößert) aus der Fig. 2 ersichtlich. Die Abdichtbahn 14 weist eine vorzugsweise mittige Trägereinlage 15 aus zum Beispiel Polyestervlies auf. Die Trägereinlage 15 ist vollständig eingebettet in zwei äußere Deckschichten 16 und 17. Beide Deckschichten 16 und 17 bestehen aus Bitumen, vorzugsweise Polymer-Bitumen. Die untere Deckschicht 16 liegt auf der Dämmschicht 13 auf.

Sie ist üblicherweise mit der Dämmschicht 13 verklebt oder in ähnlicher Weise verbunden. In der oberen Deckschicht 17 ist erfindungsgemäß eine Brandschutzschicht 18 eingebettet. Sie befindet sich mit geringem Abstand unterhalb der Oberseite 19 der oberen Deckschicht 17. Alternativ kann die Abdichtbahn auch mehrere Trägereinlagen (zum Beispiel gemäß EP-0 269 989 B1) aufweisen.

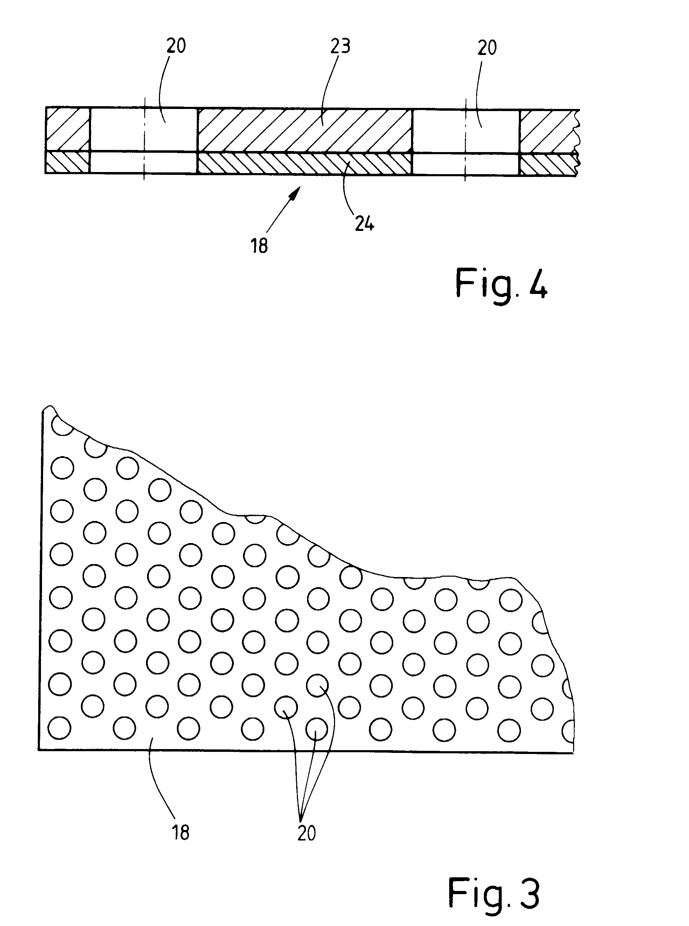

Die in den Fig. 3 und 4 näher dargestellte Brandschutzschicht 18 ist mit einer Perforation versehen. Diese besteht aus einer Vielzahl von auf die Oberfläche der Brandschutzschicht 18 verteilten Durchbrüchen, die hier als nach einem gleichmäßigen Raster zueinander angeordnete Bohrungen 20 ausgebildet sind. Alternativ können die Durchbrüche anders gestaltet sein, beispielsweise oval, elliptisch oder als Vielecke. Die Brandschutzschicht 18 ist derart in der oberen Deckschicht 17 der Abdichtbahn 14 eingebettet, daß diese vorzugsweise alle Bohrungen 20 gleichmäßig ausfüllt. Auf diese Weise teilt die Brandschutzschicht 18 die obere Deckschicht 17 nur bereichsweise in zwei unterschiedlich dicke Teilschichten, nämlich eine dünnere obere Teilschicht 21 und eine dickere untere Teilschicht 22, auf, weil die obere Teilschicht 21 und die untere Teilschicht 22 im Bereich der Bohrungen 20 miteinander verbunden sind.

Der Fig. 4 ist entnehmbar, daß die Brandschutzschicht 18 mehrlagig ausgebildet ist. Die obere Lage 23 besteht aus einem nicht brennbaren Material. Vorzugsweise ist die obere Lage 23 aus einer Aluminiumfolie oder -platte gebildet. Es können aber auch andere nichtbrennbare Materialien, insbesondere Metalle, Glasvliese oder Glasgewebe Verwendung finden. Die Dicke der oberen Lage 23 beträgt zwischen 8 und 50 um. In besonderen Fällen kann die Dicke der oberen (nichtbrennbaren) Lage 23 bis zu 1 mm betragen. Auf der Unterseite ist die obere Lage 23 mit einer dünneren, unteren Lage fest verbunden. Vorzugsweise ist die obere Lage 23 mit der unteren Lage 24 beschichtet. Bei der unteren Lage 24 handelt es sich um einen thermoplastischen Kunststoff, insbesondere Polypropylen, Polyamid oder Polyester. Die untere Lage 24 macht die Brandschutzschicht 18 flexibel sowie rißbeständig und damit besser handhabbar. Darüber hinaus schafft sie eine bessere Verbindung zur unteren Deckschicht 16 aus Bitumen, insbesondere Polymer-Bitumen. Die Dicke der unteren Lage 24 liegt im Bereich von 8 bis 20 µm. Aus diesem Grunde ist es alternativ auch denkbar, die obere Seite der oberen Lage 23 mit einer Beschichtung aus dem Material der unteren Lage 24 zu versehen. Eine solche Brandschutzschicht würde sich dann aus drei Lagen zusammensetzen.

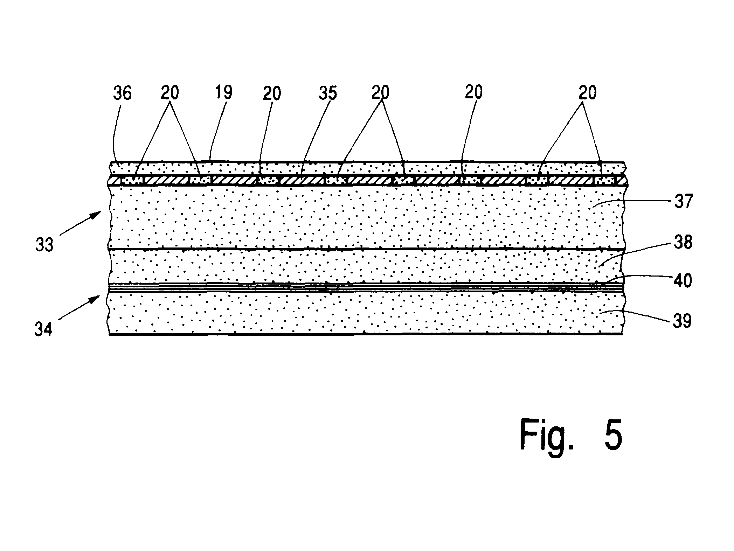

Die Fig. 5 zeigt eine Alternative der in der Fig. 2 dargestellten Abdichtbahn 14. Es handelt sich dabei um zwei übereinander angeordnete, einzelne Abdichtbahnen 33 und 34. Die (obere) Abdichtbahn 33 verfügt über eine vollständig in Bitumen eingebettete Brandschutzschicht 35. Diese kann der Brandschutzschicht 18 nach den Fig. 3 und 4 entsprechen. Oberhalb der Brandschutzschicht 35 befindet sich eine dünne Deckschicht 36, wohingegen unterhalb der Brandschutzschicht 35 eine dickere Deckschicht 37 angeordnet ist. Die Deckschichten 36 und 37 bestehen gleichermaßen aus Bitumen, insbesondere Polymer-Bitumen. Bei der unteren Abdichtbahn 34 kann es sich um eine übliche Abdichtbahn handeln, bei der zwischen zwei Deckschichten 38 und 39 eine Trägereinlage 40 eingebettet ist. Alternativ kann die Abdichtbahn 34 auch mehrere Trägereinlagen mit einer mittleren Bitumenschicht aufweisen.

Die beiden Abdichtbahnen 33 und 34 sind in üblicher Weise miteinander verbunden, nämlich verschweißt und/oder verklebt. Die Anordnung der Brandschutzschicht 35 in einer zweiten Abdichtbahn 33 hat den Vorteil, daß diese nachträglich, beispielsweise im Sanierungsfalle, auf eine bereits vorhandene, konventionelle Abdichtbahn 34 aufgebracht wird.

Abweichend von den hier gezeigten Ausführungsbeispielen ist es denkbar, die Brandschutzschicht einer Trägereinlage der Abdichtbahn zuzuordnen. Zu diesem Zweck wird vor der Beschichtung der Trägereinlage mit Bitumen die Brandschutzschicht auf die Trägereinlage aufgebracht, und vorzugsweise aufgenadelt. Mit dem Aufnadeln entstehen gleichzeitig die Durchbrüche in der Brandschutzschicht. Es ist auch möglich, die Brandschutzschicht mit zusätzlichen Durchbrüchen zu versehen. In diesem Falle wird die in den Fig. 3 und 4 gezeigte Brandschutzschicht 18 auf die Trägereinlage aufgenadelt oder in sonstiger Weise mit der Trägereinlage verbunden. Bei dieser Ausführungsform der Erfindung ist eine einfache Herstellung der Abdichtbahn möglich, weil die Brandschutzschicht zusammen mit der Trägereinlage als Einheit im Bitumen eingebettet werden kann und somit ein zusätzlicher Schritt zur Einbettung der separaten Brandschutzschicht in Bitumen entfällt.

Auch ist es möglich, die Abdichtbahn nur aus der beidseitig mit Bitumen oder dergleichen beschichteten Brandschutzschicht zu bilden. In diesem Falle erfüllt die Brandschutzschicht gleichzeitig die Funktion der Trägereinlage, so daß eine zusätzliche, separate Trägereinlage entfallen kann.

Mit der gezeigten Dachabdichtung 10 ist eine brandlöschende Wirkung erzielbar, indem bei einem Brand auf der oberen Teilschicht 21 der Abdichtbahn 14 das brennbare Material aufgeweicht bzw. verflüssigt wird und infolgedessen durch die Bohrungen 20 in der Brandschutzschicht 18 abtropft. Es sammelt sich auf der Dämmschicht 13, und zwar insbesondere in durch teilweises Wegschmelzen derselben entstehenden Hohlräumen. Dadurch wird dem Brand oberhalb der Brandschutzschicht 18 brennbares Material entzogen, wodurch nach relativ kurzer Zeit das Feuer erlischt.

Die Erfindung eignet sich nicht nur für Dachabdichtungen 10; vielmehr auch für zum Beispiel Wand- oder Deckenabdichtungen.

## Patentansprüche

1. Abdeckung, insbesondere für Dächer, mit mindestens einer Dämmschicht (13) und/oder Tragschicht (11) und wenigstens einer darauf angeordneten Abdichtbahn (14, 33), der wenigstens eine Durchbrüche aufweisende Brandschutzschicht (18, 35) zugeordnet ist, **dadurch gekennzeichnet,** daß auf beiden Seiten der Brandschutzschicht (18, 35) eine Schicht aus Bitumen angeordnet ist zur Einbettung der Brandschutzschicht (18, 35) in die Abdichtbahn (14, 33) und die Durchbrüche der Brandschutzschicht (18, 35) mit Bitumen ausgefüllt sind zur Verbindung der Schichten aus Bitumen auf gegenüberliegenden Seiten der Brandschutzschicht (18, 35) durch das Bitumen in den Durchbrüchen.

2. Abdeckung nach Anspruch 1, dadurch gekennzeichnet, daß die Durchbrüche als Bohrungen (20) ausgebildet sind, die vorzugsweise gleichmäßig über die gesamte Fläche der Brandschutzschicht (18, 35) verteilt sind.

3. Abdeckung nach Anspruch 1 oder 2, dadurch gekennzeichnet, daß die Brandschutzschicht (18, 35) wenigstens teilweise aus einem nicht brennbaren Material, insbesondere einer Aluminiumfolie oder einem Aluminiumgitter, besteht.

4. Abdeckung nach einem der vorhergehenden Ansprüche, dadurch gekennzeichnet, daß die Brandschutzschicht (18, 35) mehrlagig ausgebildet ist, vorzugsweise aus einer Lage (23) aus dem nicht brennbaren Material und einer damit verbundenen, zweiten Lage aus einem Kunststoff, insbesondere einem thermoplastischen Kunststoff wie Polypropylen, Polyamid oder Polyester, besteht.

5. Abdeckung nach einem der vorhergehenden Ansprüche, gekennzeichnet durch zwei Abdichtbahnen (33, 34), wobei die obere Abdichtbahn (33) wenigstens eine Brandschutzschicht (35) aufweist.

6. Abdichtbahn, insbesondere für Dächer, mit mindestens einer Deckschicht (17) aus Bitumen, vorzugsweise Polymer-Bitumen, einer Durchbrüche aufweisenden Brandschutzschicht (18, 35) und vorzugsweise mindestens einer in der Deckschicht (17) eingebetteten Trägereinlage (15), dadurch gekennzeichnet, daß die Brandschutzschicht (18, 35) in der Deckschicht (17) eingebettet ist, indem die Deckschicht (17) zwei auf beiden Seiten der Brandschutzschicht (18, 35) angeordnete Teilschichten (21, 22; 36, 37) aus Bitumen aufweist, und die Teilschichten (21, 22; 36, 37) miteinander verbunden sind, indem die Durchbrüche der Brandschutzschicht (18, 35) mit Bitumen ausgefüllt sind.

7. Abdichtbahn nach Anspruch 6, dadurch gekennzeichnet, daß die Brandschutzschicht (18) im oberen Bereich der Deckschicht (17) angeordnet ist.

8. Abdichtbahn nach einem der vorhergehenden Ansprüche, dadurch gekennzeichnet, daß die Brandschutzschicht (18) dicht unter der Oberseite (19) bzw. Außenseite der Deckschicht (17) angeordnet ist.

9. Abdichtbahn nach einem der vorhergehenden Ansprüche, dadurch gekennzeichnet, daß die Brandschutzschicht (18, 35) sich über die gesamte Fläche der Deckschicht (17) erstreckt.

## Claims

1. Covering, particularly for roofs, with at least one insulating layer (13) and/or carrying layer (11) and with at least one sealing membrane (14, 33) which is arranged thereon and which is assigned at least one fireproofing layer (18, 35) having perforations, characterized in that a layer of bitumen is arranged on both sides of the fireproofing layer (18, 35) for the purpose of embedding the said fireproofing layer (18, 35) into the sealing membrane (14, 33), and the perforations in the fireproofing layer (18, 35) are filled with bitumen for the purpose of connecting the layers of bitumen on opposite sides of the fireproofing layer (18, 35) by means of the bitumen in the perforations.

2. Covering according to Claim 1, characterized in that the perforations are designed as bores (20) which are distributed, preferably uniformly over the entire area of the fireproofing layer (18, 35).

3. Covering according to Claim 1 or 2, characterized in that the fireproofing layer (18, 35) consists at least partially of a non-combustible material, in particular of an aluminium foil or an aluminium grid.

4. Covering according to one of the preceding claims, characterized in that the fireproofing layer (18, 35) is of multi-ply design, preferably consists of a ply (23) composed of a non-combustible material and of a second ply connected to the latter and composed of a plastic, in particular a thermal plastic, such as polypropylene, polyamide or polyester.

5. Covering according to one of the preceding claims, characterized by two sealing membranes (33, 34), the upper sealing membrane (33) having at least one fireproofing layer (35).

6. Sealing membrane, particularly for roofs, with at least one covering layer (17) of bitumen, preferably polymer bitumen, with a fireproofing layer (18, 35) having perforations and with preferably at least one carrier insert (15) embedded in the covering layer (17), characterized in that the fireproofing layer (18, 35) is embedded in the covering layer (17), in that the covering layer (17) has two part-layers (21, 22; 36, 37) of bitumen which are arranged on both sides of the fireproofing layer (18, 35), and the part-layers (21, 22; 36, 37) are connected to one another, in that the perforations of the fireproofing layer (18, 35) are filled with bitumen.

7. Sealing membrane according to Claim 6, characterized in that the fireproofing layer (18) is arranged in the upper region of the covering layer (17).

8. Sealing membrane according to one of the preceding claims, characterized in that the fireproofing layer (18) is arranged just below the top side (19) or outside of the covering layer (17).

9. Sealing membrane according to one of the preceding claims, characterized in that the fireproofing layer (18, 35) extends over the entire area of the covering layer (17).

## Revendications

1. Revêtement, en particulier pour toits, comportant au moins une couche isolante (13) et/ou une couche support (11) et au moins une bande d'étanchéité placée dessus (14, 33) à laquelle est associée au moins une couche de protection contre l'incendie (18, 35) présentant des jours, caractérisé par le fait que sur les deux faces de la couche de protection contre l'incendie (18, 35) est placée une couche de bitume pour l'encastrement de la couche de protection contre l'incendie (18, 35) dans la bande d'étanchéité (14, 33), et les jours de la couche de protection contre l'incendie (18, 35) sont remplis de bitume pour l'union des couches de bitume placées sur les faces opposées de la couche de protection contre l'incendie (18, 35) par le bitume situé dans les jours.

2. Revêtement selon la revendication 1, caractérisé par le fait que les jours sont des trous (20) qui sont de préférence uniformément répartis sur toute la surface de la couche de protection contre l'incendie (18, 35).

3. Revêtement selon l'une des revendications 1 et 2, caractérisé par le fait que la couche de protection contre l'incendie (18, 35) est constituée au moins en partie d'une matière incombustible, en particulier d'une feuille d'aluminium ou d'un treillis d'aluminium.

4. Revêtement selon l'une des revendications précédentes, caractérisé par le fait que la couche de protection contre l'incendie (18, 35) est constituée de plusieurs strates, de préférence d'une strate (23) en matière incombustible et d'une deuxième strate unie à celle-ci et constituée d'un plastique, en particulier d'un thermoplastique tel que polypropylène, polyamide ou polyester.

5. Revêtement selon l'une des revendications précédentes, caractérisé par deux bandes d'étanchéité (33, 34), la bande d'étanchéité supérieure (33) présentant au moins une couche de protection contre l'incendie (35).

6. Bande d'étanchéité, en particulier pour toits, comportant au moins une couche de couverture (17) en bitume, de préférence en bitume polymère, une couche de protection contre l'incendie présentant des jours (18, 35) et de préférence au moins une armature (15) noyée dans la couche de couverture (17), caractérisée par le fait que la couche de protection contre l'incendie (18, 35) est noyée dans la couche de couverture (17), par le fait que cette dernière présente deux couches partielles (21, 22 ; 36, 37) en bitume placées sur les deux faces de la couche de protection contre l'incendie (17, 35), et les couches partielles (21, 22 ; 36, 37) sont unies par le fait que les jours de la couche de protection contre l'incendie (18, 35) sont remplis de bitume.

7. Bande d'étanchéité selon la revendication 6, caractérisée par le fait que la couche de protection contre l'incendie (18) est placée dans la partie supérieure de la couche de couverture (17).

8. Bande d'étanchéité selon l'une des revendications précédentes, caractérisée par le fait que la couche de protection contre l'incendie (18) est placée de manière étanche sous la face supérieure (19) ou face extérieure de la couche de couverture (17).

9. Bande d'étanchéité selon l'une des revendications précédentes, caractérisée par le fait que la couche de protection contre l'incendie (18, 35) s'étend sur toute la surface de la couche de couverture (17).
